Europäisches Patentamt

European Patent Office

Office européen des brevets

(11) Publication number: **0 351 038**
**A1**

# EUROPEAN PATENT APPLICATION

(21) Application number: **89304230.9**

(51) Int. Cl.⁴: **G01P 15/09**

(22) Date of filing: **27.04.89**

(30) Priority: **10.06.88 US 205410**

(43) Date of publication of application:
**17.01.90 Bulletin 90/03**

(84) Designated Contracting States:
**BE DE FR GB LU NL**

(71) Applicant: **Hewlett-Packard Company**
**3000 Hanover Street**
**Palo Alto California 94304(US)**

(72) Inventor: **Christensen, K. Trent**
**2520 - 121st Drive NE**
**Lake Stevens Washington 98258(US)**

(74) Representative: **Colgan, Stephen James et al**
**CARPMAELS & RANSFORD 43 Bloomsbury**
**Square**
**London WC1A 2RA(GB)**

(54) **Improved accelerometer and method of manufacture.**

(57) A simple, inexpensive and rugged accelerometer
is disclosed which generates high uniform output
charge/voltage over any cross section for a given
vibration. The transducer (10) element is composed
of two electrically opposed, adhered layers (12, 14)
of piezoelectric plastic configured into a triangular
beam (18), cantilever mounted and metallized on top
(22) and bottom (24). As acceleration induces a
bending stress in the beam, a charge, proportional to
the stress, is induced on the metallized plates. The
transducer element is preferably cut to the desired
shape using a water knife to minimize edge ir-
regularities.

FIG. 1

## IMPROVED ACCELEROMETER AND METHOD OF MANUFACTURE

The present invention relates to accelerometers, and more particularly relates to accelerometers that can be mass produced at low cost and can withstand extreme mishandling.

### BACKGROUND AND SUMMARY OF THE INVENTION

Prior art accelerometers have generally been expensive, sometimes hand-made instruments composed of micromachined parts, carefully prestressed, fastidiously assembled and then microwelded together. This mechanical complexity has made the instruments both expensive and fragile.

The fragile nature of prior art accelerometers is, in part, due to their use of quartz or ferroceramic transducer elements which are typically preloaded by an inertial mass. The more sensitive the accelerometer, the larger the mass, rendering the transducer susceptible to fracturing if exposed to a mechanical jolt. Consequently, accelerometers are typically sold and stored in shock dampening enclosures to mitigate the risk of damage. Once removed from the storage containers, such accelerometers are sometimes carried to the structure under test on pillows to minimize shocks. This fragility has made use of such sensitive accelerometers a tedious exercise.

While accelerometers transducers have classically used fracture prone quartz or ferroceramic materials as their active elements, other piezoelectric materials have also been considered. Exemplary is polyvinylidene fluoride (PVDF), a piezoelectric plastic film marketed by Pennwalt under the trademark Kynar. In the prior art, use of this material has largely been limited to undemanding transducer applications such as microphones and speakers. Certain qualities of the plastic have been thought to make it unsuitable for use in precision accelerometers. Exemplary of this view is the attitude expressed by Brüel & Kjaer, a well regarded manufacturer of such instruments. In its journal entitled "Technical Review," Number 2, 1987, Brüel & Kjaer discusses polyvinylidene fluoride at pages 10-11 and dismisses it as a potential accelerometer transducer, stating that it is "too unstable for measurement purposes."

The fragility of prior art accelerometers would not be such a concern were it not for their prohibitive expense. An instrument that cost hundreds or thousands of dollars may be rendered worthless by a single jolt. Accelerometer expense is compounded when a measurement application, such as the modal testing of a large structure, may require hundreds of such instruments. More daunting still is the accelerometer expense associated with the destructive testing of structures or materials, in which all of the accelerometers involved are destroyed with the item under test.

Thus, there is a critical need for inexpensive and rugged accelerometers that can overcome the abovenoted drawbacks of the prior art.

Accordingly, it is a principal object of the present invention to provide a rugged and inexpensive accelerometer.

It is a more particular object of the present invention to provide an accelerometer that can be manufactured without expensive precision machining, precise element prestressing or alignment, or fastidious assembly.

It is another object of the present invention to provide a precision accelerometer that is not susceptible to transducer cracking.

It is still another object of the present invention to provide an accelerometer in which the component parts can be easily, yet accurately aligned and bonded together with simple adhesives.

According to the preferred embodiment of the present invention, an accelerometer is constructed using as its transducer element a bimorph beam comprised of first and second electrically opposed polyvinylidene films bonded together. A rectangular end portion of the beam is received into a correspondingly shaped recess formed in a metal base member. The rectangular portion is fastened in place with a conductive epoxy. An opposite, triangular-shaped end portion of the beam is thus cantilevered from the base member and is permitted to flex under accelerational forces. The upper and lower surfaces of this triangular-shaped portion of the beam are metallized over their entire extent to permit electric charges produced during such flexing to be coupled from the beam. The mechanical properties of the triangular geometry produce a uniform stress distribution throughout the entire length of the cantilevered portion, thereby generating piezoelectric charge over this entire area.

Since the triangular geometry eliminates stress concentrations in the beam, the metallized surface and the polyvinylidene do not experience cracking as might be experienced by a rectangular plate of the same material. The piezoelectric plastic is also not susceptible to cracking under extreme shock conditions as are piezo-quartz and ferroceramics.

The foregoing and additional objects, features and advantages of the present invention will be more readily apparent from the following detailed description, which proceeds with reference to the accompanying drawings.

## DESCRIPTION OF DRAWINGS

Fig. 1 is an isometric view of an accelerometer according to the present invention.

Fig. 2 is an exploded view of the accelerometer of Fig. 1.

Fig. 3 is a top view of a transducer element used in the accelerometer of Fig. 1.

Fig. 4 is a side view of the transducer element used in the accelerometer of Fig. 1.

## DETAILED DESCRIPTION

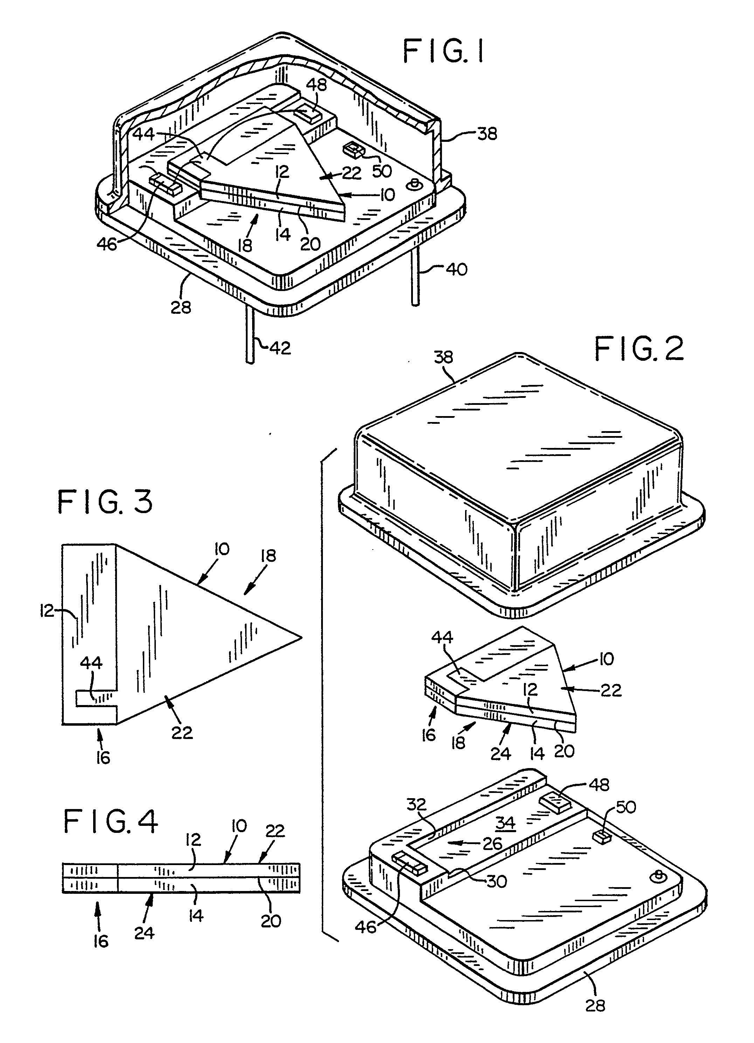

Referring to Figs. 1-4, the preferred embodiment of the present invention includes a bimorph beam transducer element 10 comprised of first and second electrically opposed piezoelectric plastic films 12, 14. These films may be polyvinylidene fluoride films sold by Pennwalt under the trademark Kynar. The illustrated films are each 0.5 millimeters in thickness and have overall lengths of eight millimeters. The eight millimeter length comprises a rectangular end portion 16 (two millimeters in length and six millimeters across), and an isosceles triangular end portion 18 (six millimeters in length and six millimeters across the base). Films 12, 14 are bonded together by a thin layer of an adhesive 20 such as urethane epoxy.

To facilitate electrical connection to the beam 10, the upper and lower surfaces 22, 24 thereof are metallized using silver ink or aluminum-nickel plating. This metallization extends over substantially the entire area of the triangular portion 18, for reasons discussed below.

To assemble the accelerometer, rectangular end portion 16 of the bimorph beam is positioned into a correspondingly shaped recess 26 (Fig. 2) in a base member 28. (Base member 28 can be stamped out of metal and includes first, second and third orthogonally intersecting planar surfaces 30, 32 and 34 which define the corner recess 26.) To secure the rectangular end portion 16 in place, and to thereby cantilever triangular end portion 18 from the base 28, a conductive epoxy is used on the three surfaces which define the corner recess. (The epoxy can also be spread over part of the top surface 22 of bimorph beam 10 if care is taken not to contact the conductive metallization thereon.) The conductive epoxy serves not only as an adhesive, but also acts to connect the metallization on the lower surface of the beam 24 to the metal base member 28, thereby electrically grounding the lower surface of the beam. This use of epoxy to position the transducer element in the base greatly simplifies assembly over prior art techniques which require precision welding or the use of threaded fasteners.

The three orthogonal surfaces 30, 32 and 34 in base member 28 aid in accelerometer accuracy by limiting the shearing motion of one film relative to the other along the epoxy bonding plane 20. The surfaces 30, 32 and 34 also insure that the adhesive bond between the films is a true neutral axis and that its length does not change as might occur if only the bottom of end portion 16 was rigidly fastened in place. Finally, the corner 26 formed by these intersecting planes greatly simplifies the otherwise tedious task of accurately positioning the transducer in the sensor during assembly.

The above-described assembly is enclosed by a lid 38 which mateably engages base 28. In the preferred embodiment, a hermetic seal is effected between these two elements to prevent the piezoelectric response of the transducer element from varying with atmospheric effects. The enclosure is sized to permit motion of the bimorph beam 10 under the influence of accelerational forces.

To connect the accelerometer to the outside world, base member 28 includes first and second connector pins 40, 42 extending therefrom. Pin 42 is electrically connected to the metal base member 28 (and thus to the bottom surface 24 of bimorph beam 10 through the conductive epoxy) and serves as a ground lead for external connection. Pin 40 is coupled (through optional amplifier circuitry) to a tail 44 of metallization on the top ungrounded surface 22 of the transducer element and provides an output signal indicative of acceleration forces. (The optional amplifier circuitry is shown as comprising three chip components 46, 48, 50 which serve to amplify the electric signal from the transducer element 10 before coupling it to the output pin 40.)

## Fabrication

Traditional techniques for cutting piezoelectric films, such as by using X-Acto knives, cutting dies and the like, can sometimes produce film edges with edge defects and irregularities which degrade accelerometer operation. A preferable technique is to apply a high pressure stream of fluid, such as water (either with or without abrasive agents) to the plastic films in a focused, high pressure (i.e. 60,000 psi) water jet. Films cut by this technique, when examined under an electron microscope, are seen to have a more uniform edge surface than those cut with alternative technologies.

The films used in the present invention can be cut to the desired shape either before or after they are bonded together and metallized. Cutting after bonding and metallizing is somewhat preferable in that it optimizes uniformity of the upper and lower films comprising the beam. The metallization process is desirably provided by silkscreening the metal ink onto the films. The surfaces of the films can be plasma etched or sandblasted, either before or after cutting, to permit a better bond with the epoxy adhesives.

## Operation

The triangular beam geometry used in the present invention has the desirable property of constant stress along its entire length when flexed. This constant stress produces a constant piezoelectric charge per unit surface area over the entire cantilevered portion of the beam. To maximize sensitivity, it is thus desirable that the beam be metallized over the entire triangular portion, from tip to base, to sense all of the piezoelectric charge produced thereon. (In prior art rectangular beam accelerometers, only a portion of the beam is metallized since only a portion of the beam undergoes stresses which generate piezoelectric signals. Metallizing the entire surface of a rectangular beam would reduce the piezoelectric response per unit area.)

Since the triangular geometry eliminates stress concentrations in the beam, the metallized surface and the polyvinylidene fluoride do not experience cracking as might be experienced by a rectangular plate of the same material. The piezoelectric plastic is also not susceptible to cracking under extreme shock conditions as are traditional piezoelectric materials.

Due to the light weight of the accelerometer's component parts, the entire assembly illustrated weighs less than two grams, approximately a third of what comparable prior art transducers weigh. This small mass aids in measurement accuracy since accelerometers act as spurious loading masses on the structures to which they are mounted. By minimizing mass, the error introduced by such spurious mass loading is also minimized.

The illustrated transducer may find use in applications requiring measurements of accelerations in the 0-10g range with an output of approximately fifty millivolts per g. (Plastic piezoelectrics have an advantage of producing approximately ten times the output signal of quartz transducer elements in comparable applications.) The invention could, of course, be sized differently if other measurement ranges or sensitivities are desired.

Having described and illustrated the principles of my invention with reference to a preferred embodiment, it should be apparent that the invention can be modified in arrangement and detail without departing from its principles. Accordingly, I claim all modifications as may come within the scope and spirit of the following claims.

## Claims

1. An accelerometer comprising:
a base member (28), said base member having first and second orthogonally intersecting planar surfaces (32, 34) defining a corner recess (26);
first and second piezoelectric plastic films (12, 14) having substantially identical shapes, said films each having first and second opposed surfaces;
adhesive means (20) bonding the first surface of the first film to the first surface of the second film to form a bimorph beam (10), said bimorph beam having an end portion (16) which can be received into the aforesaid corner defined by the base member;
metallization (22) on the second surfaces of the first and second films, said surfaces comprising first and second opposed surfaces of the bimorph beam;
securing means for securing the aforesaid end portion (16) of the bimorph beam (10) into the corner defined by the base assembly to cantilever an opposite end (18) of the bimorph beam from said base member;
enclosure means (38) cooperating with the base member (28) to define an enclosure with an interior cavity within which the cantilevered bimorph beam (10) can move under the influence of accelerational forces;
coupling means (40, 42) permitting a signal produced by the piezoelectric films to be coupled from the metallization thereon to a location external of said enclosure;
and in which the metallization on said beam extends over substantially the entire area of the cantilevered portion and in which the cantilevered portion (18) has the shape of an isosceles triangle.

2. The accelerometer of claim 1 in which:
the piezoelectric plastic films comprise polyvinylidene fluoride;
the enclosure means defines a hermetically sealed package; and
the coupling means comprises first and second coupling elements mounted to said package.

3. The accelerometer of claim 1 in which the securing means comprises conductive adhesive.

4. The accelerometer of claim 1 in which the corner recess is further defined by a third planar surface (30) orthogonally intersecting the first and second planar surfaces (32, 34).

5. An accelerometer comprising:
first and second piezoelectric plastic films (12, 14) bonded together to form a bimorph beam (10);
coupling means (40, 42) for coupling piezoelectrically generated signals from said beam;
a support (28);
mounting means cantilevering said beam from said support to define a cantilevered portion (18) of the beam;
and in which the cantilevered portion (18) of the beam is triangular in shape.

6. The accelerometer of claim 5 in which the coupling means includes metallization extending over first and second opposed surfaces (22, 24) on the triangular, cantilevered portion (18) of the bimorph beam (10).

7. The accelerometer of claim 5 in which the cantilevered portion (18) of the beam (10) has the shape of an isosceles triangle.

8. The accelerometer of claim 5 in which the first and second piezoelectric plastic films (12, 14) comprise polyvinylidene fluoride.

9. The accelerometer of claim 5 in which the mounting means includes conductive adhesive.

10. The accelerometer of claim 5 in which the support defines a corner recess (26) bounded by first and second orthogonally intersecting planar surfaces (32, 34) and in which the mounting means positions an end (16) of said bimorph·beam (10) into said corner recess.

11. A method of constructing an accelerometer comprising the steps:
applying a high pressure stream of fluid against a piezoelectric plastic film to cut said film into first and second pieces (12, 14) each having portions (18) in the shape of isosceles triangles;
bonding said first and second pieces together to form a bimorph beam (10);
metallizing a surface (22, 24) of each of the piezoelectric film pieces comprising the bimorph beam; and
cantilevering the bimorph beam from a support (28).

12. The method of claim 11 in which the metallizing step comprises applying a conductive ink to the surface of each of the film pieces using a silkscreening process.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 026 394 (NISSAN MOTOR CO.) <br> * Page 8, lines 1-28; figures 2,4-6 * | 1-3,5,9 | G 01 P 15/09 |
| A | GB-A-1 567 238 (MINNESOTA MINING) <br> * Page 2, lignes 28-43; page 3, lines 17-43; figures 1,2,5 * | 1,2,8 | |
| A | US-A-3 478 604 (E.J. EVANS) <br> * Column 3, lines 46-49; figure 1 * | 1,5,7 | |
| A | US-A-4 676 104 (D.E. CULLEN) <br> * Column 3, lines 40-43; figure 1 * | 1,5,10 | |
| A | GB-A-2 033 584 (KELLETT et al.) <br> * Page 2, lines 12-39; figures * | 1 | |

TECHNICAL FIELDS
SEARCHED (Int. Cl.4)

G 01 P
G 01 L

The present search report has been drawn up for all claims

| Place of search | Date of completion of the search | Examiner |
|---|---|---|
| THE HAGUE | 30-10-1989 | HANSEN P. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P0401)